# EUROPÄISCHE PATENTANMELDUNG

(11) **EP 0 999 106 A2**
(43) Veröffentlichungstag der Anmeldung: **10.05.2000**
(21) Anmeldenummer: 99120525.3
(22) Anmeldetag: 15.10.1999
(51) Int. Cl.: B60T 8/18

(54) **Hydraulisches Drucksteuerventil**

(30) Priorität: 03.11.1998 DE 19850609
(71) Anmelder: ROBERT BOSCH GMBH, 70442 Stuttgart (DE)
(72) Erfinder: Trucksess, Rainer, 71665 Vaihingen/Enz (DE); Steprath, Werner, 41542 Dormagen (DE)

(57) **Zusammenfassung**

Es wird ein hydraulisches Drucksteuerventil (10) vorgeschlagen, das eine stufenlose Regelung der Druckverhältnisse zwischen einem Zulauf (34) und einem Ablauf (32) ermöglicht. Hierzu umfaßt das Drucksteuerventil (10) eine von außen betätigbare Stellvorrichtung (24) und eine von zwei Kolben-Zylinder-Einheiten (16, 18), die mittels einer Wippe (20) in Wirkverbindung miteinander stehen, gebildete Ventileinrichtung (14). Die Position der Stellvorrichtung (24) ist relativ zur Wippe (20) veränderbar. Eingesetzt in einer hydraulischen Ein-Kreis-Bremsanlage für Fahrzeuge ist dadurch der Bremsdruck in Abhängigkeit von deren Beladungszustand stufenlos regelbar.

## Beschreibung

### Stand der Technik

Die Erfindung geht aus von einem hydraulischen Drucksteuerventil entsprechend der Gattung des Anspruchs 1. Drucksteuerventile werden beispielsweise in hydraulischen Ein-Kreis-Bremsanlagen von Anhängern für landwirtschaftliche Nutzfahrzeuge eingesetzt, um den Bremsdruck an den Beladungszustand des Anhängers anzupassen. Dadurch läßt sich ein unerwünschtes Unter- oder Überbremsen des Anhängers vermeiden und die Fahrstabilität der Zugmaschinen-Anhänger-Einheit bzw. der Verschleiß der Bremsanlage verbessern.

Es sind bereits hydraulische Drucksteuerventile bekannt, die aus o.g. Gründen manuell in verschiedene Betriebsstellungen umschaltbar sind. Beispielsweise können drei Schaltstellungen für einen vollbeladenen, einen teilbeladenen und einen nichtbeladenen Anhänger vorgesehen sein. Zwischenstellungen oder stufenlose Regelungen sind jedoch bei diesen bekannten Drucksteuerventilen nicht möglich. Eine versehentlich falsche, d.h. an den Beladungszustand nicht angepasste Einstellung der Drucksteuerventile kann in bestimmten Fahrsituationen verhängnisvolle Folgen haben; zudem weisen bekannte Drucksteuerventile einen relativ komplexen und teuren Aufbau auf.

Des weiteren sind Lastkraftwagen mit pneumatischen Bremsanlagen bekannt, bei denen der Beladungszustand des Fahrzeugs den Bremsdruck bestimmt. Pneumatische Anlagen können jedoch zur Umgebung hin druckentlastet werden und benötigen daher keinen Rücklauf. Dies reduziert den Bauaufwand für die Steuerventile erheblich; deren konstruktive Gestaltung ist aber aufgrund eines fehlenden Rücklaufs nicht auf hydraulische Einrichtungen übertragbar.

### Vorteile der Erfindung

Demgegenüber weist ein hydraulisches Drucksteuerventil mit den kennzeichnenden Merkmalen des Anspruchs 1 den Vorteil auf, daß es einfach aufgebaut und stufenlos verstellbar ist. Hierzu ist das Drucksteuerventil mit einer Ventileinrichtung aus zwei mittels einer Nippe gekoppelten Kolben-Zylinder-Einheiten und einer auf die Wippe einwirkenden Stellvorrichtung ausgestattet. Letzte ist, zur Veränderung der wirksamen Hebelverhältnisse, gegenüber dieser Nippe verschiebbar und läßt sich manuell, elektromechanisch oder mechanisch betätigen. Das erfindungsgemäße Drucksteuerventil besteht aus wenigen, relativ einfach herstellbaren Bauteilen, ist leicht zu montieren und robust gegenüber Verschmutzung oder Verschleiß. Weitere Vorteile oder vorteilhafte Weiterbildungen der Erfindung ergeben sich aus den Unteransprüchen und der Beschreibung.

### Zeichnung

Zwei Ausführungsbeispiele der Erfindung sind in der Zeichnung dargestellt und in der nachfolgenden Beschreibung näher erläutert. In den Figuren 1 und 2 ist das erste und in den Figuren 3 und 4 das zweite Ausführungsbeispiel eines hydraulischen Drucksteuerventils jeweils im Längs- und im Querschnitt dargestellt; Figur 5 zeigt einen Anwendungsfall für hydraulische Drucksteuerventile in stark schematisierter Form; in Figur 6 ist das Drucksteuerventil als Schaltsymbol offenbart.

### Beschreibung der Ausführungsbeispiele

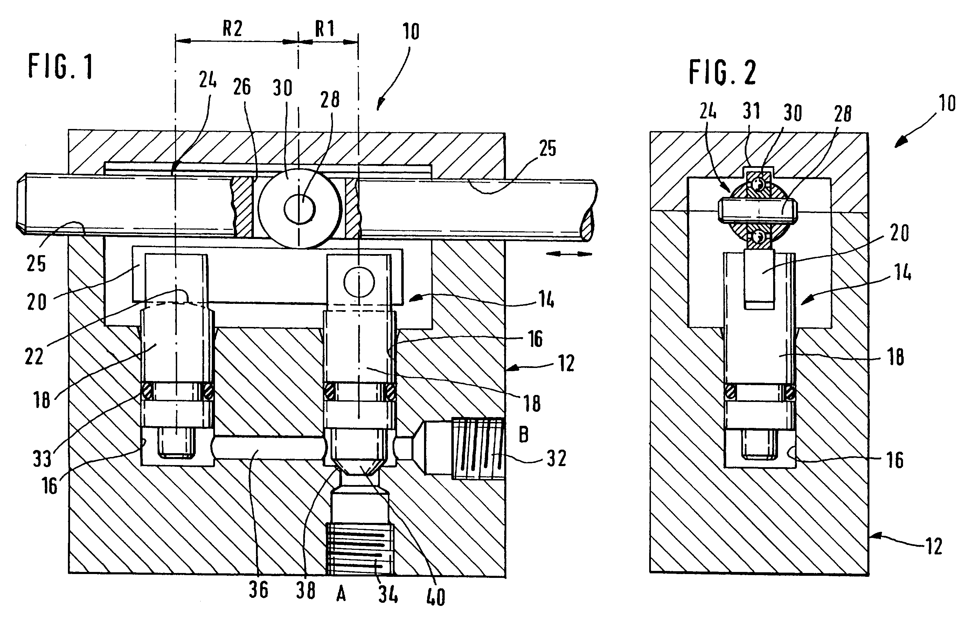

Das in den Figuren 1 und 2 dargestellte Drucksteuerventil 10 besteht aus einem zweigeteilten Gehäuse 12, in dessen Innenraum eine Ventileinrichtung 14 angeordnet ist. Die Ventileinrichtung 14 wird von zwei nebeneinanderliegenden Einheiten aus jeweils einem Zylinder 16 und einem darin geführten Kolben 18 gebildet. Letztere sind mittels einer quer zu ihren Zylinderachsen verlaufenden Wippe 20 miteinander gekoppelt. An einem der Kolben 18 ist diese Wippe 20 schwenkbar festgelegt, am anderen Kolben 18 liegt die Wippe 20 an einer, im Ausführungsbeispiel ballig nach außen gewölbten Betätigungsfläche 22 auf.

Mit der Wippe 20 wirkt eine Stellvorrichtung 24 zusammen, die im Ausführungsbeispiel exemplarisch als Stößel ausgeführt ist. Dieser ist in seitlichen Ausnehmungen 25 des Gehäuses 12 längsverschiebbar geführt und ragt zu seiner Betätigung beidseitig über das Gehäuse 12 hinaus. Etwa in der Mitte seiner axialen Ausdehnung ist in der Stellvorrichtung 14 ein Längsschlitz 26 ausgebildet, in den eine auf einem quer eingepreßten Stift 28 gelagerte Rolle 30 drehbar angeordnet ist. Vorteilhafterweise kann als Rolle 30 ein Wälzlagerelement eingesetzt werden. Dessen Außendurchmesser ist größer als der Durchmesser der Stellvorrichtung 14, so daß die Rolle 30 beidseitig aus dem Längsschlitz 26 des Stößels hervorsteht. Mit ihren hervorstehenden Abschnitten liegt die Rolle 30 einerseits an der Wippe 20 und andererseits an der inneren Wandung des Gehäuses 12 an. Der Figur 2 ist zu entnehmen, daß diese innere Wandung die Bodenfläche einer das Gehäuse 12 in Querrichtung durchlaufenden Nut 31 ist. Diese Nut 31 nimmt Querkräfte auf die Rolle 30 auf und sichert diese dadurch gegen Kippen.

Der Verstellbereich der Stellvorrichtung 14 erstreckt sich innerhalb der von den beiden Zylinderachsen gebildeten Grenzen, wobei die Wippe 20 aufgrund der hydraulischen Kräfte aus den Zylindern 16 eine Schwenkbewegung um ihre Abstützung an der Rolle 30 ausführt. Die dabei vorliegenden Verhältnisse zwischen den Hebelarmen R1 und R2 stellen an einem Ablauf 32 des Drucksteuerventils 10 ein Druckniveau ein, das gegenüber dem Druckniveau eines Zulaufs 34 je nach Position der Stellvorrichtung 14 größer, kleiner oder gleich groß ist. Diese Funktionsweise wird anhand der nachfolgend zu beschreibenden hydraulischen Wechselwirkungen im Drucksteuerventil 10 verdeutlicht.

Die beiden Kolben 18 begrenzen mit ihren von der Wippe 20 entfernt liegenden und am Umfang mit Dichtelementen 33 versehenen Enden zusammen mit den Zylindern 16 zwei Arbeitskammern, die mittels eines in Figur 1 horizontal angeordneten Druckmittelkanals 36 hydraulisch miteinander gekoppelt sind. Im Umfangsbereich des Gehäuses 12 geht dieser Druckmittelkanal 36 in den Ablauf 32 des Drucksteuerventils 10 über. Demgegenüber ist der Zulauf 34 exzentrisch an der Stirnseite des Drucksteuerventils 10 ausgebildet. Der Zulauf 34 ist im Ausführungsbeispiel fluchtend zu einem der Zylinder 16 angeordnet und mündet beispielhaft rechtwinklig in den Druckmittelkanal 36 ein. Diese Mündungsstelle in den Druckmittelkanal 36 ist als Ventilsitz 38 ausgebildet, der von einem Ventilglied 40 gesteuert wird. Das Ventilglied 40 ist einstückig mit dem Kolben 18 verbunden, der in dem, dem Zulauf 34 fluchtend gegenüberliegenden Zylinder 16 geführt ist. Im Ausführungsbeispiel bildet das Ventilglied 40 beispielhaft ein Kegelsitzventil; es wären jedoch auch Flachsitz-, Kugelsitz- oder Schieberventile denkbar.

Obigen Ausführungen zufolge wirken auf den, dem Zulauf 34 gegenüberliegenden Kolben 18 die Zulaufdruckkraft, die sich durch Multiplikation des Drucks im Zulauf 34 mit der zulaufseitigen Fläche des Ventilglieds 40 berechnet und die Ablaufdruckkraft, die sich aus dem Druck im Ablauf 32 multipliziert mit der ablaufseitigen Kolbenstirnfläche berechnet, ein. Die Summe dieser beiden Kräfte wird auf die Wippe 20 übertragen und steht mit der Druckkraft des vom Zulauf 34 abgewandten und nur vom Druck im Ablauf 32 beaufschlagten Kolbens 18 am gegenüberliegenden Ende der Wippe 20 in einem Verhältnis, das umgekehrt proportional zu den beiden Hebelarmen R1, R2 der Wippe 20 ist. Diese Hebelarme R1 und R2 ergeben sich durch die Angriffspunkte der beiden Zylinderkräfte und der Abstützung der Wippe 20 an der Stelleinrichtung 14.

Eine Veränderung des Druckniveaus im Zulauf 34 bewirkt, bei unveränderter Stellung der Stellvorrichtung 24, eine Änderung des Druckniveaus am Ablauf 32, wobei das Verhältnis zwischen dem Druck im Zulauf 34 und dem Druck im Ablauf 32 konstant bleibt. Dieses Verhältnis kann durch Veränderung der Relativposition der Stellvorrichtung 24 zur Wippe 20, das heißt durch Veränderung der wirksamen Hebelarme R1, R2, stufenlos variiert werden. Demnach sind beispielsweise unterschiedliche Beladungszustände von Fahrzeugen auf die Stellvorrichtung 24 übertragbar und in unterschiedliche Bremsdrücke stufenlos umwandelbar. Die Übertragung dieser Beladungszustände auf die Stellvorrichtung 24 kann manuell, über ein Hebelwerk mechanisch oder mittels Sensoren und Auswerteschaltungen elektromechanisch erfolgen.

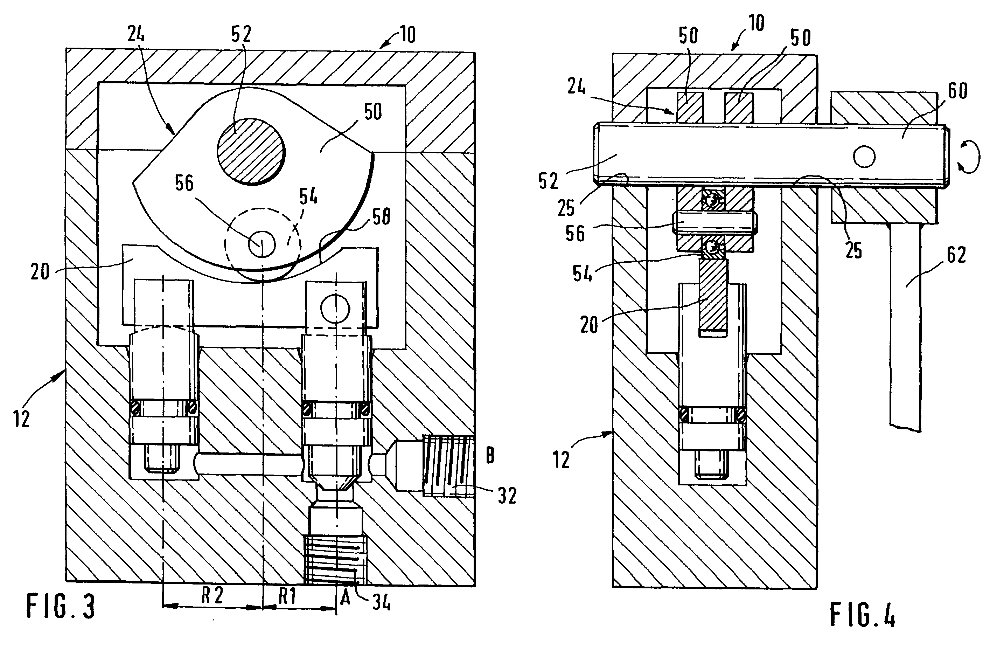

Die Figuren 3 und 4 zeigen ein zweites Ausführungsbeispiel eines erfindungsgemäßen Druckschaltventils 10. Dieses unterscheidet sich im wesentlichen in der Ausbildung der Stellvorrichtung 24 vom beschriebenen ersten Ausführungsbeispiel; das hydraulische Wirkungsprinzip ist identisch.

Im zweiten Ausführungsbeispiel besteht die Stellvorrichtung 24 aus zwei mit Abstand hintereinanderliegenden Kulissenscheiben 50, die mittels einer Nabe an einer Stellwelle 52 befestigt sind. Die Kulissenscheiben 50 haben jeweils die Form eines Kreissegments und nehmen zwischen sich eine Rolle 54 auf, die drehbar auf einem die beiden Kulissenscheiben 50 miteinander verbindenden Querstift 56 gelagert ist. Als Rolle 54 kann auch bei diesem zweiten Ausführungsbeispiel ein Wälzlagerelement eingesetzt werden. Dieses Wälzlagerelement stützt sich auf einer Innenkreisbahn 58 ab, die an der die beiden Kolben 18 miteinander koppelnden Wippe 20 ausgebildet ist. Diese Kreisbahn erstreckt sich zwischen den beiden Längsachsen der Kolben 18. Die, die Kulissenscheiben 50 tragende Stellwelle 52 verläuft quer zur Wippe 20 und ist in Ausnehmungen 25 des Gehäuses 12 gelagert. Zur Ausbildung eines Antriebzapfens 60 ragt die Stellwelle 52 über dieses Gehäuse 12 hinaus. Dort ist an der Stellwelle 52 die Nabe eines Anlenkhebels 62 verdrehfest befestigt. Über diesen Anlenkhebel 62 wird der Stellwelle 52 eine Drehbewegung erteilt, aufgrund der sich der Auflagepunkt der Rolle 30 an der Wippe 20 verändert. Mit dieser Positionsveränderung geht eine entsprechende Änderung der Hebelarme R1 und R2 einher, die sich wie bereits im ersten Ausführungsbeispiel erläutert, in einer Änderung des Druckverhältnisses zwischen dem Druck im Zulauf 34 und dem Druck im Ablauf 32 des Drucksteuerventils 10 auswirkt.

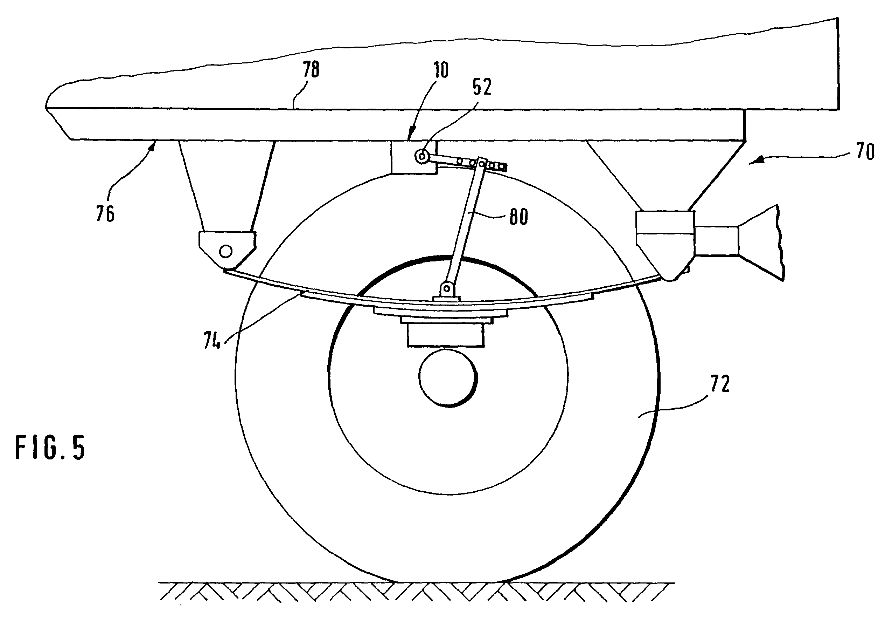

In Figur 5 ist in einer vereinfachten Darstellung gezeigt, wie die beschriebenen Drucksteuerventile 10 zur mechanischen Umsetzung des Beladungszustandes eines Fahrzeugs 70 in unterschiedliche Bremsdrücke zu applizieren sind. Figur 5 zeigt ein Rad 72 des Fahrzeugs 70, das gefedert von einer Blattfeder 74 einen Aufbau 76 mit einer Ladefläche 78 trägt. Das Drucksteuerventil 10 ist auf der dem Rad 72 zugewandten Seite am Aufbau 76 festgelegt und mittels eines mit der Stellwelle 52 des Druckregelventils 10 verbundenen, winkelförmigen Anlenkhebels 80 an der Blattfeder 74 angelenkt. Eine Beladung des Fahrzeugs 70 führt durch die Verformung der Blattfeder 74 zur Veränderung des Abstandes zwischen der Nabe des Rades 72 und dem Aufbau 76. Diese Abstandsänderung wird vom Anlenkhebel 80 in eine Drehbewegung für die Stellwelle 52 des Drucksteuerventils 10 umgewandelt. Dadurch verändern sich die wirksamen Hebelarme R1 und R2 an der Wippe 20 des Drucksteuerventils 10 (Figuren 1 und 3). Dies wirkt sich in einem dem Beladungszustand angepaßten Bremsdruck am Ablauf 32 des Drucksteuerventils 10 aus. Ein frühzeitiges Über- beziehungsweise Unterbremsen des Fahrzeugs 70 wird somit vermieden.

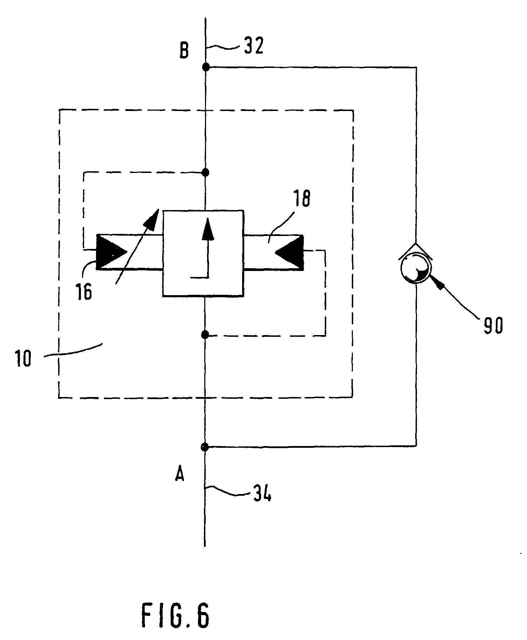

Die beschriebenen Drucksteuerventile 10 sind in Figur 6 noch in Form einer Schaltsymboldarstellung offenbart. Darin ist mit A der mit einer zeichnerisch nicht dargestellten Druckversorgungseinrichtung verbundene Zulauf 34 und mit B der mit einer ebenfalls nicht gezeichneten Bremseinrichtung gekoppelte Ablauf 32 des Drucksteuerventils 10 bezeichnet. Wie bereits erläutert, erfolgt die Verstellung des Drucksteuerventils 10 von extern, mittels zwei hydraulisch beaufschlagten und einander entgegenwirkenden Kolben-/Zylinder-Einheiten 16, 18. Dabei ist die hydraulische Beaufschlagung dieser Kolben-/Zylinder-Einheiten 16,18 vom Druckniveau des Ablaufs 32 oder von dem des Zulaufs 34 bestimmt. Parallel zum Drucksteuerventil 10 liegend, ist in einem Bypaß ein Rückschlagventil 90 vorgesehen, das entgegen der Strömungsrichtung durch das Drucksteuerventil 10 öffnet. Dieses Rückschlagventil 90 dient erforderlichenfalls der Druckentlastung des Bremskreises zum Lösen der am Ende des Ablaufs 32 angeordneten Bremseinrichtung.

Selbstverständlich sind Änderungen oder Ergänzungen am beschriebenen Ausführungsbeispiel möglich, ohne vom Grundgedanken der Erfindung abzuweichen.

## Patentansprüche

1. Hydraulisches Drucksteuerventil (10) mit einem Gehäuse (12), in dessen Innenraum eine Ventileinrichtung (14) zur Steuerung der Druckverhältnisse zwischen wenigstens einem Zulauf (34) und wenigstens einem Ablauf (32) beweglich geführt ist und mit einer von außen betätigbaren, auf die Ventileinrichtung (14) einwirkenden Stellvorrichtung (24), dadurch gekennzeichnet, daß die Ventileinrichtung (14) wenigstens zwei nebeneinander angeordnete, hydraulisch verbundene und eine Druckmittelverbindung vom Zulauf (34) zum Ablauf (32) steuernde Kolben-Zylinder-Einheiten (16, 18) umfaßt, deren Kolben (18) mittels einer Wippe (20) miteinander in Wirkverbindung stehen, daß die Stellvorrichtung (24) in ihrer Relativposition zur Wippe (20) stufenlos veränderbar ist und eine Abstützung für die Wippe (20) aufweist.

2. Hydraulisches Drucksteuerventil nach Anspruch 1, dadurch gekennzeichnet, daß einer der Kolben (18) der Ventileinrichtung (14) einen Ventilkörper (40) zur Steuerung des Zulauf (34) umfaßt und daß die Druckmittelverbindung vom Zulauf (34) zum Ablauf (32) als Ventilsitz (40) ausgeführt ist.

3. Hydraulisches Drucksteuerventil nach einem der Ansprüche 1 oder 2, dadurch gekennzeichnet, daß der Zulauf (34) an der Stirnseite und der Ablauf (32) am Umfang des Gehäuses (12) vorgesehen sind.

4. Hydraulisches Drucksteuerventil nach einem der Ansprüche 1 bis 3, dadurch gekennzeichnet, daß die Wippe (20) an einem der Kolben (18) schwenkbar gelagert ist und am anderen Kolben (18) an einer Betätigungsfläche (22) aufliegt.

5. Hydraulisches Drucksteuerventil nach einem der Ansprüche 1 bis 4, dadurch gekennzeichnet, daß die Stelleinrichtung (24) ein nach außen ragender längsveschiebbarer Stößel ist, der im wesentlichen achsparallel zur Wippe (20) geführt ist.

6. Hydraulisches Drucksteuerventil nach einem der Ansprüche 1 bis 4, dadurch gekennzeichnet, daß die Stelleinrichtung (24) wenigstens eine Kulissenscheibe (50) umfaßt, die mit Hilfe einer nach außen ragenden Stellwelle (52) relativ zur Wippe (20) verschwenkbar ist.

7. Hydraulisches Drucksteuerventil nach einem der Ansprüche 5 oder 6, dadurch gekennzeichnet, daß die Stelleinrichtung (24) eine drehbar gelagerte Rolle (30) umfaßt, die die Abstützung für die Wippe (20) bildet.

8. Hydraulisches Drucksteuerventil nach Anspruch 7, dadurch gekennzeichnet, daß die Rolle (30) ein Wälzlagerelement ist.

9. Hydraulische Bremsanlage, insbesondere für Fahrzeuge, die zur stufenlosen Anpassung an dessen Beladungszustand mit einem Drucksteuerventil (10) nach einem der Ansprüche 1 bis 9 ausgestattet ist.

10. Hydraulische Bremsanlage nach Anspruch 10, dadurch gekennzeichnet, daß parallel zum Drucksteuerventil (10) nach den Ansprüchen 1 bis 8 ein in Gegenstromrichtung öffnendes Rückschlagventil zur Druckentlastung des Bremskreises vorhanden ist.
